# EUROPÄISCHE PATENTSCHRIFT

(11) **EP 0 932 519 B1**
(45) Veröffentlichungstag und Bekanntmachung des Hinweises auf die Patenterteilung: **17.01.2001**
(21) Anmeldenummer: 97911240.6
(22) Anmeldetag: 22.10.1997
(51) Int. Cl.: B60N 2/02, B60N 2/44

(54) **Verfahren zum Einstellen einer Fahrzeugsitzkomponente**
Process for adjusting a vehicle seat
Procédé d'ajustement d'un composant de siège de véhicules

(30) Priorität: 25.10.1996 DE 19644376; 27.11.1996 DE 19649149
(43) Veröffentlichungstag der Anmeldung: 04.08.1999
(73) Patentinhaber: Bayerische Motoren Werke Aktiengesellschaft, 80788 München (DE)
(72) Erfinder: WAGNER, Peer-Oliver, D-81241 München (DE)
(86) Internationale Anmeldenummer: EP9705845
(87) Internationale Veröffentlichungsnummer: WO9818648

(56) Entgegenhaltungen:
- EP-A- 0 489 310
- DE-A- 19 605 779
- US-A- 5 320 409
- PATENT ABSTRACTS OF JAPAN vol. 13, no. 573 (M-909) [3921] , 19.Dezember 1989 & JP 01 240330 A (TOYOTA AUTOM LOOM WORKS LTD), 25.September 1989,

## Beschreibung

Die Erfindung bezieht sich auf eine Verstellverfahren für einen Fahrzeugsitz mit den Merkmalen des Oberbegriffs von Patentanspruch 1.

Ein derartiges Verfahren ist aus der EP 489 310 A bekannt. Dabei wird der Sitz zur Komforterhöhung lokal aus- oder eingebeult und durch die damit erreichte Oberflächenveränderung eine Anpassung an die Behaglichkeitsbedürfnisse des jeweiligen Benutzers erreicht.

Aus der DE 196 05 779 A ist ein Verstellverfahren für einen Fahrzeugsitz mit mindestens einer Sitzkomponente bekannt, der ein Antrieb und ein damit zusammenwirkender Drucksensor in der Sitzkomponente zugeordnet ist und bei dem das Ende der Verstellung bestimmt ist durch einen vorgegebenen Auflagedruck des Benutzers. Bei der Sitzkomponente handelt es sich um Sitz-Wangen. Dabei werden auf einen willkürlich aufgegebenen Schaltbefehl hin ausschliesslich die beiden Sitz-Wangen verstellt. Ausgehend von einer weiten Ausgangsposition, in der sich die beiden Wangen in ihrer Extremlage befinden, werden sie auf den Schaltbefehl hin zugefahren, bis durch einen integrierten Drucksensor ein vorgegebener Auflagedruck des Benutzers ermittelt wird.

Die Wangen werden dann in dieser Position festgesetzt. Der massgebliche Schaltwert des Drucksensors ist stets konstant. Eine derartige Einstellung erfolgt in der Regel lediglich einmal durch den Benutzer zu Beginn einer Fahrt. Dem bekannten Verfahren liegt die Überlegung zugrunde, dass jeder Benutzer, relativ zu seiner Körperbreite, durch Ausformung und Polsterung in jeder Fahrsituation gleich abgestützt sein will. Es ist nicht vorgesehen, ausgehend von der dann erreichten Position die Wangen an einen neuen Benutzer oder für den jetzigen Benutzer auf seinen Wunsch hin erneut anzupassen. Vielmehr ist hierzu das vorbereitende Einstellen der Ausgangsposition erforderlich.

Auch dieses Verstellverfahren ist allein darauf gerichtet, die Behaglichkeit zu erhöhen. Eine Anpassung an die Sicherheitsbedürfnisse des Fahrgastes ist damit nicht verbunden.

Der Erfindung liegt die Aufgabe zugrunde, ein Verstellverfahren der eingangs genannten Art zu schaffen, das an die tatsächlichen Komfort- und Sicherheitsbedürfnisse des Fahrgastes auch während einer Fahrt angepaßt ist.

Die Erfindung löst diese Aufgabe durch die Kennzeichnenden Merkmale des Patentanspruchs 1.

Zwei Gesichtspunkte sind für die Erfindung wesentlich. Zum einen werden nunmehr die Betriebsparameter des Fahrzeugs für die Einstellung der Sitzkomponenten berücksichtigt. Dabei handelt es sich um Daten über das Verhalten des Fahrers, wie ruhige oder dynamische Fahrweise, aber auch um Fahrbahneinflüsse wie glatte Fahrbahn oder extreme Steigung sowie die aktuelle Fahrsituation wie z. B. Kurven- oder Bergabfahrt. Die Sitzkomponenten selbst können sowohl die Sitzwangen in der Sitzfläche, als auch die Seitenteile in der Lehne oder die Lehne selbst sein.

Der zweite Gesichtspunkt bezieht sich auf die Art der Einstellung der Sitzkomponente. Diese wird nunmehr nicht in der Weise eingestellt, dass vorbereitend eine weite Einstellposition angefahren wird. Vielmehr wird lediglich anhand des Ausgangssignals des Drucksensors festgestellt, ob dieses über bzw. unter dem Schaltwert liegt und der Antrieb der Sitzkomponente in der Weise vorgenommen, dass das Ausgangssignal durch einen zielgerichteten Verstellvorgang, d. h. die Verstellung in einer einzigen Richtung, an den Schaltwert angepasst wird. Steigt das Ausgangssignal mit steigendem Auflagedruck an und ist es kleiner (grösser) als der Schaltwert, so wird die Verstellung derart vorgenommen, dass eine Erhöhung (Erniedrigung) des Auflagedrucks und damit des Sensor-Ausgangssignals eintritt.

Dadurch wird die Möglichkeit eröffnet, die Verstellung auch während einer Fahrt selbsttätig vornehmen zu können. Zu keiner Phase der Verstellung tritt eine Veränderung der Seitenführungskraft des Fahrgastes ein, die die Sicherheit des Fahrgastes verringern würde. Vielmehr ist die Verstellung des Fahrzeugsitzes stets in Richtung einer Erhöhung der Sicherheit des Fahrgastes gerichtet.

Die Information über die Betriebsparameter des Fahrzeugs liegen in der Regel in verschiedenen Antriebs-Steuergeräten des Fahrzeugs bereits vor. Hier zu nennen ist das Motorsteuergerät und das Getriebesteuergerät. Beide Geräte können für sich oder in Verbindung miteinander die zum Einstellen der Sitzkomponenten notwendigen Informationen liefern. Dadurch kann die seitliche Abstützung des Fahrgasts abhängig von seinem Fahrverhalten sowie den Fahrbahneinflüssen und der Fahrsituation variiert werden.

Damit ist es auch möglich die Verstellung der Sitzkomponente(n) bei einer beschleunigten Bewegung des Fahrzeugs so vorzunehmen, dass sie der durch die Beschleunigung bedingten Bewegung des Fahrgasts entgegenwirkt.

Anhand der Zeichnung ist die Erfindung weiter erläutert. Es zeigt
- Fig. 1: einen Fahrzeugsitz zur Erläuterung einer ersten Ausführung des erfindungsgemäßen Verfahrens und
- Fig. 2: einen weiteren Fahrzeugsitz zur Erläuterung einer zweiten Ausführungsform des Verfahrens.

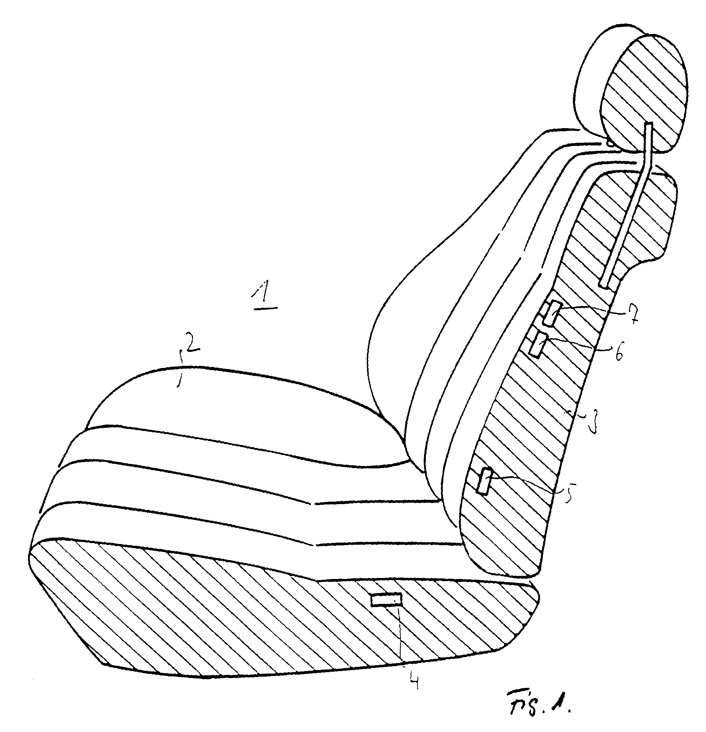

Figur 1 zeigt einen Fahrzeugsitz 1 im Schnitt und von der Seite. Im Bereich der Sitzfläche 2 sowie der Rückenlehne 3 sind dabei Drucksensoren angeordnet, von denen beispielhaft vier Sensoren 4, 5, 6, 7 dargestellt sind.

In einem Einstellmodus, in dem ein nicht dargestellter Schalter betätigt ist, kann mit Hilfe der von den Sensoren 4 bis 7 gelieferten Signale eine Korrektur der Einstellungen der Teile des Fahrzeugsitzes 1 vorgenommen werden. Hierzu wird mit Hilfe der von den Sensoren (4-7) gelieferten Drucksignale und einer nachgeschalteten, nicht dargestellten Auswerteschaltung der Auflagedruck auf den Sitzteilen 2 und 3 bestimmt. Wird der Auflagedruck auf der Sitzfläche 2 während des Einstellmodus verringert, indem der Fahrgast sein Gesäß anhebt, so wird dies in der Auswerteschaltung als Wunsch des Fahrgastes verstanden, die Höhenlage der Sitzfläche 4 zu verändern und damit die Sitzhöhe insgesamt zu vergrößern.

Entsprechend wird mit Hilfe des bzw. der unteren Sensoren in der Rückenlehne 3 (dargestellt anhand des Sensors 5) im Einstellmodus der Auflagedruck auf die Rükkenlehne erkannt und bei einer Vergrößerung bzw. Verringerung dieses Auflagedrucks der Wunsch des Fahrgastes abgeleitet, den Fahrzeugsitz 1 weiter nach hinten bzw. nach vorne zu bewegen.

Mit Hilfe der übereinander angeordneten Sensoren 6 bzw. 7 kann für einen kleineren bzw. größeren Fahrgast der Wunsch erkannt werden, die Rückenlehne stärker zu neigen bzw. in eine aufrechte Position zu bringen.

Der mit Hilfe der Sensoren 4 bis 7 bzw. weiterer in entsprechender Weise angeordneter Sensoren erkannte Wunsch des Fahrgastes, die verschiedenen Teile des Fahrzeugsitzes in ihrer Einstellung zu korrigieren bzw. unverändert zu lassen, kann mit Hilfe nicht dargestellter Einstellelemente, wie Elektromotoren und dergleichen in einem sich an den Einstellmodus anschließenden Einstellvorgang der einzelnen Sitzteile umgesetzt werden.

Auf diese Weise kann ohne gesonderte Einstellschalter für die einzelnen Sitzteile der Fahrzeugsitz in die vom Fahrgast gewünschte und seinen Komfort- und Sicherheitsbedürfnissen entsprechende Position gebracht werden.

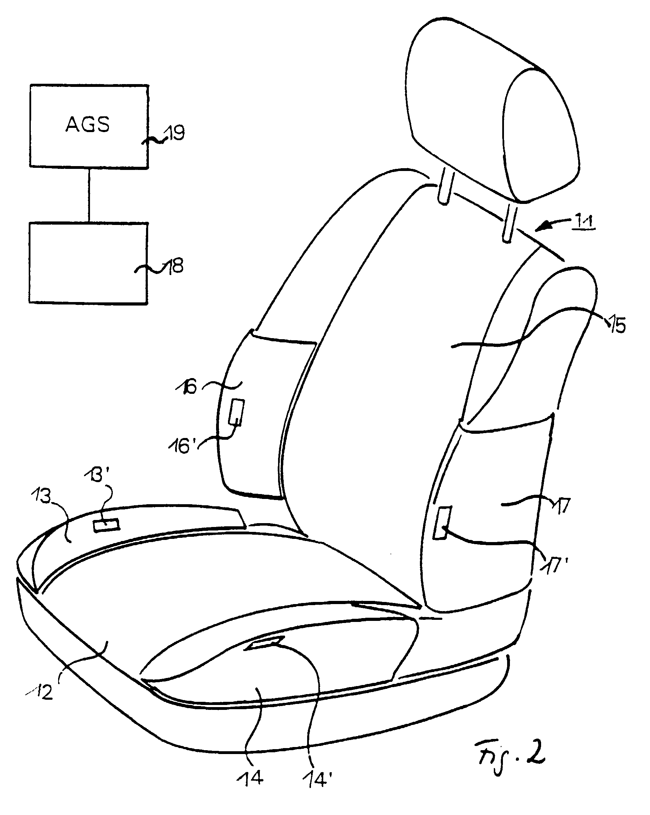

In Figur 2 ist ein Fahrzeugsitz 11 mit verstellbaren Sitzkomponenten in perspektivischer Ansicht dargestellt. Der Fahrzeugsitz 11 enthält in seinem Sitzteil 12 zwei verstellbare Sitzwangen 13 und 14 sowie in seiner Lehne 15 zwei seitliche Lehnenteile 16 und 17. Innerhalb der Teile 13, 14, 16 und 17 befindet sich integriert jeweils ein Drucksensor 13', 14', 16' und 17' sowie jeweils ein nicht dargestellter Antrieb in Form eines Elektromotors. Die Sensoren 13', 14', 16' und 17' sind mit einem Steuergerät 18 verbunden, das die Antriebsmotoren steuert. Ferner ist ein Getriebesteuergerät 19 mit dem Steuergerät 18 verbunden, das Informationen über das Verhalten des Fahrers, Fahrbahneinflüsse sowie aktuelle Fahrsituation liefert.

Die Teile 13, 14, 16 und 17 befinden sich vor dem Einsteigen des Fahrgasts in der maximal geöffneten Position. Nach dem Einsteigen des Fahrgasts werden die Teile in eine Lage gebracht, die den größtmöglichen Komfort für den Fahrgast bei ausreichender Seitenführungskraft bedeuten. Der hierfür maßgebliche Schaltwert für die Ein- und Ausschaltung der Antriebsmotore ist, bezogen auf ein druckproportionales Ausgangssignal der Sensoren 13', 14', 16' und 17', relativ niedrig. Der Zeitpunkt für das Einstellen der Teile 13, 14, 16 und 17 in ihre Ausgangslage wird beispielsweise selbsttätig durch das Anlassen der Brennkraftmaschine erkannt.

Wird nun nach Beginn der Fahrt mit Hilfe des Getriebesteuergeräts 19 eine sportlich dynamische Fahrweise erkannt, so werden die Teile 13, 14, 16 und 17 selbsttätig weiter nach innen bewegt. Der hierfür maßgebliche Schaltwert der Drucksensoren ist gegenüber dem für die Ausgangsstellung maßgeblichen Wert erhöht. Durch die selbsttätige Bewegung der Sitzteile wird die Seitenführungskraft für den Fahrgast erhöht und seine Sicherheit ebenfalls erhöht.

Werden ebenfalls über das Getriebesteuergerät 19 seitliche Beschleunigungen durch Kurvenfahrten oder aber auch vertikale Beschleunigungen bei Bergauf- und Bergabfahrten erkannt, werden die Sitzkomponenten selbsttätig und auch unabhängig voneinander so eingestellt, daß damit der Beschleunigung des Fahrgasts entgegengewirkt wird. Der hierfür maßgebliche Schaltwert kann dann für jeden der Sensoren 13', 14', 16' und 17' unterschiedlich und entsprechend den äußeren Bedingungen gewählt werden. Jede der Sitzkomponenten wird durch eine nur in einer Richtung ausgerichtete Bewegung so verstellt, daß der Schaltwert des zugeordneten Drucksensors möglichst schnell erreicht wird.

Nicht dargestellt ist die Möglichkeit, auch im zentralen Lehnenteil, beispielsweise im Bereich der Lordose einen Drucksensor vorzusehen, mit dem in Verbindung mit einem in der Lehne angeordneten Antrieb deren Neigung entsprechend den Betriebsparametern des Fahrzeugs variiert wird.

Ergänzend ist es auch möglich, zusätzlich zu den Betriebsparametern auch physiologische Eigenschaften des Fahrgasts, wie beispielsweise auch sein Alter, Gewicht und dergleichen zu berücksichtigen und beispielsweise mit zunehmendem Alter dem Komfortbedürfnis durch eine entsprechend angepaßte Einstellung der Sitzkomponenten Rechnung zu tragen. Die Information über die physiologischen Eigenschaften des Fahrgasts kann an das Steuergerät 18 mit Hilfe einer Chipkarte oder dergleichen übermittelt werden, die diese Daten enthält und die beim Einsteigen des Fahrgasts diese Daten übermittelt.

## Patentansprüche

1. Verstellverfahren für einen Fahrzeugsitz (11) mit mindestens einer Sitzkomponente (13,14,16,17), der ein Antrieb und ein damit zusammenwirkender Drucksensor (13',14',16',17') in der Sitzkomponente zugeordnet ist, bei dem das Ende der Verstellung bestimmt ist durch einen vorgegebenen Auflagedruck des Benutzers und bei dem die Verstellung der Sitzkomponente bei beliebiger Ausgangslage vorgenommen wird in einer Wirkrichtung, die abhängt von dem durch den Drucksensor bestimmten Auflagedruck des jetzigen Benutzers zu Beginn der Verstellung, dadurch gekennzeichnet, daß die Form des Fahrzeugsitzes an die Fahrweise des Fahrers angepaßt wird, indem eine Sitzkomponente der durch die Fahrweise bedingten Bewegung des Fahrgastes entgegengerichtet bewegt wird.

2. Verstellverfahren nach Anspruch 1, dadurch gekennzeichnet, daß die Information über die Fahrweise des Fahrers durch ein Motorsteuergerät geliefert wird.

3. Verstellverfahren nach einem der Ansprüche 1 oder 2, dadurch gekennzeichnet, daß die Information über die Fahrweise des Fahrers durch ein Getriebesteuergerät (19) geliefert wird.

4. Verstellverfahren nach einem der Ansprüche 1 bis 3, dadurch gekennzeichnet, daß die Verstellung der Sitzkomponente bei einer beschleunigten Bewegung des Fahrzeugs der durch die Beschleunigung bedingten Bewegung des Fahrgastes entgegenwirkt.

## Claims

1. A method of adjusting a vehicle seat (11) comprising at least one component (13, 14, 16, 17) associated with a drive and a pressure sensor (13', 14', 16', 17') co-operating therewith in the seat component, wherein the end of the adjustment is determined by a preset pressure of the user sitting on it and wherein the seat component is adjusted from an arbitrary starting position into an operative position which depends on the pressure of the sitter, determined by the pressure sensor, at the beginning of the adjustment, characterised in that the shape of the seat is adapted to the manner of driving, by moving a seat component in a direction opposite to the movement of the seat caused by the driving.

2. A method of adjustment according to claim 1, characterised in that information about the driving is delivered by an engine control device.

3. A method of adjustment according to claim 1 or claim 2, characterised in that information about the driving is delivered by a gear control device (19).

4. A method of adjustment according to any of claims 1 to 3, characterised in that during accelerated motion of the vehicle, the adjustment of the seat component counteracts the motion of the occupant caused by the acceleration.

## Revendications

1. Procédé de réglage d'un siège de véhicule (11) possédant au moins un composant de siège (13, 14, 16, 17) auquel sont associés un entraînement et coopérant avec lui et logé dans le composant, un détecteur de pression (13', 14', 16, 17'), selon lequel la fin de le réglage est défini par une valeur donnée d'une pression d'appui exercée par l'occupant du siège, le déplacement du composant du siège à partir d'une position initiale quelconque ayant lieu dans une direction dépendant de la valeur, donnée par le détecteur, de la pression d'appui exercée par l'occupant au début du réglage,
caractérisé en ce que
la forme du siège du véhicule est adaptée au style de conduite du conducteur, à savoir qu'un composant du siège est déplacé dans le sens opposé à celui du mouvement de l'occupant, résultant du style de conduite.

2. Procédé selon la revendication 1,
caractérisé en ce que
l'information concernant le style de conduite du conducteur est donnée par un appareil de commande du moteur.

3. Procédé selon la revendication 1 ou 2,
caractérisé en ce
l'information concernant le style de conduite du conducteur est donnée par un appareil de commande de la boîte de vitesses (19).

4. Procédé selon l'une quelconque des revendications 1 à 3,
caractérisé en ce que
le déplacement du composant de siège, lors d'un mouvement d'accélération du véhicule, s'oppose au déplacement de l'occupant sous l'effet de l'accélération.
